# DEMANDE DE BREVET EUROPEEN

(11) **EP 4 388 938 A1**
(43) Date de publication de la demande: **26.06.2024**
(21) Numéro de dépôt: 23307160.4
(22) Date de dépôt: 08.12.2023
(51) Int. Cl.: A47B 95/04, F16B 12/14, F16B 5/02, F16B 37/14, B27M 3/18

(54) **DISPOSITIF DE FIXATION AMOVIBLE, KIT D'ASSEMBLAGE ET PROCEDES CORRESPONDANTS**

(30) Priorité: 21.12.2022 FR 2214110
(71) Demandeur: Combeau, Massao, 1020 Renens (CH)
(72) Inventeur: Combeau, Massao, 1020 Renens (CH)
(74) Mandataire: Santarelli

(57) **Abrégé**

L'invention concerne un dispositif de fixation amovible d'un premier élément de mobilier (A) à un deuxième élément de mobilier (B), ledit premier élément de mobilier (A) comportant un trou débouchant (9) muni d'une première extrémité (90) débouchant sur une surface extérieure dudit premier élément de mobilier (A) et une deuxième extrémité configurée pour se positionner en regard d'un trou (8) formé dans ledit deuxième élément de mobilier (B), ledit trou débouchant (9) comportant :
- un alésage (1) présentant un premier diamètre (D1) ;
- un dégagement (3), ménagé dans la continuité dudit alésage (1) et présentant une forme cylindrique avec un deuxième diamètre (D2) inférieur audit premier diamètre (D1), un épaulement (2) séparant ledit alésage (1) dudit dégagement (3) ;
- une fraisure (4) ménagée dans la continuité dudit dégagement (3), et
- une portion de passage (5) ménagée dans la continuité de ladite fraisure (4),
ledit dispositif de fixation amovible comportant un cache-vis (6) formé au moins partiellement à partir d'un matériau magnétique, et une vis (munie d'une tête de vis et d'un corps de vis,
ledit dispositif de fixation amovible étant mobile entre au moins une position libérée, et une position assemblée.

## Description

### Domaine de l'invention

La présente invention se rapporte au domaine de l'ameublement, dans le cadre de l'agencement des environnements privés, publics, voire même professionnels, tels que les habitations, les bureaux, les magasins, ou les bâtiments publics.

Plus particulièrement, l'invention concerne un dispositif de fixation amovible d'un premier élément de mobilier à un deuxième élément de mobilier, de sorte à monter des structures de mobilier.

L'invention concerne également un kit d'assemblage de mobilier, un procédé de fabrication ainsi qu'un procédé de montage d'un tel kit d'assemblage de mobilier.

### Etat de la technique antérieure

Dans le domaine de l'ameublement, les fabricants sont soumis à de nombreuses contraintes, par exemple de stockage ou de transport, ce qui nécessite souvent que le mobilier soit vendu en kit à monter, composé de plusieurs éléments qui sont ensuite assemblés pour donner la forme au mobilier, et obtenir par exemple une armoire, une commode, une étagère, ou un bureau. Pour des raisons pratiques, notamment de manutention ou de protection, il est utile que ce mobilier soit démontable, par exemple dans le cadre d'un déménagement.

Pour assembler entre eux les différents éléments d'un mobilier, il est connu de former au moins un trou débouchant dans au moins un des éléments de mobilier, et un trou qui peut être borgne ou débouchant dans au moins un autre des éléments de mobilier, puis de lier un premier élément de mobilier à un deuxième élément de mobilier par le biais d'une vis, et de répéter plusieurs fois l'opération pour obtenir le mobilier. Ces vis, une fois insérées dans les trous débouchants puis serrées, permettent donc de maintenir les éléments entre eux.

Si certaines extrémités de trous débouchant et certaines têtes de vis peuvent être laissées apparentes, il est également connu d'en dissimuler au moins certaines depuis l'extérieur par le biais d'un cache-vis.

De tels cache-vis, qui sont généralement des bouchons en bois ou en plastique, sont montés par-dessus les têtes de vis, et sont souvent collés ou simplement bloqués dans les empreintes des têtes de vis, de manière à ne pas dépasser d'une surface extérieure de l'élément d'un mobilier. Ils présentent classiquement un diamètre sensiblement égal au diamètre à l'endroit de l'extrémité du trou débouchant de sorte à rester dans leur emplacement par l'effet de frottement ou de collage.

Toutefois, un inconvénient de tels cache-vis est qu'ils s'avèrent relativement délicats à insérer de manière optimale pour un utilisateur non professionnel, dans le cadre d'un montage de mobilier, et également à retirer lors du démontage du mobilier. L'insertion d'un cache-vis nécessite au préalable une insertion optimale de la vis afin de laisser la place suffisante pour le positionnement du cache-vis. Il s'avère ainsi nécessaire de pré-percer le trou et d'enfoncer la vis suffisamment loin pour que le cache-vis ait une place suffisante pour être positionné. En effet, si l'on s'appuie sur les qualités perçantes d'une vis, le trou ne sera pas suffisamment régulier et précis pour que le cache-vis soit bien positionné. En outre, le retrait du cache-vis pour accéder à la vis à desserrer, par exemple pour démonter le meuble, s'avère relativement difficile sans détruire le cache-vis, par exemple par perçage. En outre, et dans le cas où il n'est pas nécessaire de le détruire, le retrait du cache-vis impose classiquement l'emploi d'outils adaptés de sorte à faire un effet levier sur le cache-vis, ce qui présente un risque important d'endommager l'élément de mobilier au niveau de l'extrémité du trou débouchant.

D'autres cache-vis sont montés par-dessus les têtes de vis et dépassent de l'extrémité du trou débouchant, formant une protubérance sur la surface extérieure de l'élément d'un mobilier. Cela permet ainsi de les retirer aisément en limitant les risques de détérioration de l'élément de mobilier. Pour que ces caches-vis puissent tenir en place, ils présentent une portion de maintien s'étendant depuis le corps du cache-vis et venant coopérer avec la tête de vis, par collage, par frottement sur la surface cylindrique du trou, ou par insertion dans l'empreinte, de la tête de vis.

Cependant, un inconvénient d'un tel cache-vis est que la protubérance formée à la surface extérieure de l'élément de mobilier dénature l'esthétique de l'objet et peut gêner son insertion dans un environnement prédéfini. En outre, un autre inconvénient potentiel d'un tel cache-vis est que son retrait présente un risque de casse au niveau de la portion de maintien qui peut rester bloquée dans la forme creusée dans la tête de vis ou qui se déchire du fait de la colle. De ce fait, le cache-vis ne peut plus être réutilisé après un démontage.

D'autres caches-vis, comprenant un capuchon et un aimant fixé à l'intérieur du capuchon, par exemple dans un logement formé dans le capuchon, existent.

Toutefois, un inconvénient est qu'une telle réalisation nécessite de minimiser la taille de l'aimant fixé dans le capuchon et donc de minimiser les performances magnétiques et la compacité d'un tel cache-vis de sorte que la tenue magnétique d'un tel cache vis s'avère non satisfaisante. En outre, du fait de la minimisation des performances magnétiques, les utilisations potentielles d'un tel cache-vis sont limitées car pour un petit orifice, le cache-vis présentera une taille faible et l'aimant sera encore plus faible, rendant insuffisant son potentiel d'attraction magnétique avec la vis en vis-à-vis.

Il existe donc un besoin de résoudre au moins en partie certains des inconvénients de l'art antérieur.

### Exposé de l'invention

L'invention concerne un dispositif de fixation amovible d'un premier élément de mobilier à un deuxième élément de mobilier, ledit premier élément de mobilier comportant un trou débouchant muni d'une première extrémité débouchant sur une surface extérieure dudit premier élément de mobilier et une deuxième extrémité configurée pour se positionner en regard d'un trou formé dans ledit deuxième élément de mobilier, ledit trou débouchant comportant :
- un alésage présentant un premier diamètre D1 ;
- un dégagement, ménagé dans la continuité dudit alésage et présentant une forme cylindrique avec un deuxième diamètre D2 inférieur audit premier diamètre D1, un épaulement séparant ledit alésage dudit dégagement ;
- une fraisure ménagée dans la continuité dudit dégagement, et
- une portion de passage ménagée dans la continuité de ladite fraisure,

ledit dispositif de fixation amovible comportant un cache-vis formé au moins partiellement à partir d'un matériau magnétique, et une vis munie d'une tête de vis et d'un corps de vis,
ledit dispositif de fixation amovible étant mobile entre au moins une position libérée, et une position assemblée dans laquelle :
   - ladite vis est logée dans ledit trou débouchant, le corps de vis étant partiellement logé au niveau de ladite portion de passage et étant maintenu dans ledit trou dudit deuxième élément de mobilier, ladite tête de vis étant logée au niveau de ladite fraisure, et
   - ledit cache-vis est en appui contre ledit épaulement de sorte à être placé dans la continuité de la surface extérieure dudit premier élément de mobilier, et est à distance de ladite tête de vis.

L'invention propose ainsi une approche nouvelle et inventive dans laquelle le dispositif de fixation amovible mis en oeuvre comprend un cache vis facile à insérer et à bien positionner du fait qu'il est magnétiquement attiré par la vis et qu'il vient se positionner en appui contre l'épaulement. De ce fait, son placement dans la continuité de la surface extérieure dudit premier élément de mobilier se fait sans difficulté ni obstacle pour un opérateur.

De plus, le fait que ledit cache-vis soit à distance de ladite tête de vis permet d'éviter que la force magnétique qui attire le cache-vis et la vis ne soit trop importante et compromette un éventuel retrait du cache-vis.

En outre, le retrait d'un tel dispositif amovible se fait sans risque d'endommager l'élément de mobilier au niveau de l'extrémité du trou débouchant ou le cache-vis lui-même du fait que celui-ci est maintenu en appui par la force d'attraction magnétique exercée entre la vis et le cache-vis.

Ainsi, le dispositif de fixation amovible s'avère réutilisable du fait que lors d'un montage ou d'un démontage, il ne subit aucun dommage. Par ailleurs, il n'engendre aucun dommage au niveau des éléments de mobilier lors du montage ou du démontage.

Par ailleurs, un tel dispositif de fixation ne nécessite que deux éléments, à savoir un cache-vis magnétique et une vis, sans nécessiter de mettre en oeuvre un capuchon avec un logement dans lequel on fixerait un élément magnétique. Cela permet ainsi de maximiser le volume du matériau magnétique et ainsi de maximiser sa puissance tout en limitant l'épaisseur.

Cela permet en outre de mettre en oeuvre un cache-vis compact, dont l'encombrement est fortement réduit par rapport aux cache-vis amovibles de l'art antérieur.

Selon un aspect particulier de l'invention, le cache-vis est monobloc et est formé à partir d'un matériau magnétique.

Selon un aspect particulier de l'invention, ladite vis est logée dans ledit trou débouchant, le corps de vis étant partiellement logé au niveau de ladite portion de passage et étant vissé dans ledit trou dudit deuxième élément de mobilier.

Selon un aspect particulier de l'invention, ledit trou dudit deuxième élément de mobilier est un trou borgne.

Selon un aspect particulier d'au moins un mode de réalisation de l'invention, ledit cache-vis et ladite tête de vis sont séparés d'une distance comprise entre 0.5mm et 3mm.

Selon un aspect particulier d'au moins un mode de réalisation, le cache-vis est au moins partiellement réalisé à partir d'un aimant au néodyme.

En effet, pour qu'un cache-vis puisse être maintenu magnétiquement à la vis qui l'attire, il doit être équipé d'un aimant composé d'un matériau magnétique suffisamment puissant de sorte que la force magnétique qui attire les deux corps soit suffisamment importante.

Selon un aspect particulier d'au moins un mode de réalisation de l'invention, la tête de la vis présente une forme conique complémentaire de la forme de la fraisure.

Selon un aspect particulier d'au moins un mode de réalisation de l'invention, ledit cache-vis présente une couche supérieure de masquage, et, dans la position assemblée, ladite couche supérieure de masquage est ménagée dans la continuité de la surface extérieure dudit premier élément de mobilier.

Selon un aspect particulier d'au moins un mode de réalisation de l'invention, ladite tête de vis présente un troisième diamètre maximal qui est inférieur de 10% à 40% à un quatrième diamètre dudit cache-vis.

En effet, pour qu'un cache-vis puisse être maintenu magnétiquement à la vis qui l'attire, il doit être équipé d'un aimant suffisamment volumineux et puissant de sorte que la force magnétique qui attire les deux corps soit suffisamment importante. En outre, la distance inévitablement variable entre le cache-vis et la tête de vis, du fait du vissage, voire parfois du revissage de la vis, nécessite que la force magnétique puisse être suffisante quelle que soit la variation.

Cela permet en outre de mettre en oeuvre un cache-vis compact, dont l'encombrement est fortement réduit par rapport aux cache-vis amovibles de l'art antérieur.

L'invention concerne un dispositif de fixation amovible d'un premier élément de mobilier à un deuxième élément de mobilier, ledit premier élément de mobilier comportant un trou débouchant muni d'une première extrémité débouchant sur une surface extérieure dudit premier élément de mobilier et une deuxième extrémité configurée pour se positionner en regard d'un trou formé dans ledit deuxième élément de mobilier, ledit trou débouchant comportant :
- un alésage présentant un premier diamètre D1 ;
- un dégagement, ménagé dans la continuité dudit alésage et présentant une forme cylindrique avec un deuxième diamètre D2 inférieur audit premier diamètre D1, un épaulement séparant ledit alésage dudit dégagement ;
- une fraisure ménagée dans la continuité dudit dégagement, et
- une portion de passage ménagée dans la continuité de ladite fraisure,

ledit dispositif de fixation amovible comportant un cache-vis monobloc formé à partir d'un matériau magnétique recouvert d'une couche supérieure de masquage, et une vis munie d'une tête de vis et d'un corps de vis,
ledit dispositif de fixation amovible étant mobile entre au moins une position libérée, et une position assemblée dans laquelle :
   - ladite vis est logée dans ledit trou débouchant, le corps de vis étant partiellement logé au niveau de ladite portion de passage et étant maintenu dans ledit trou dudit deuxième élément de mobilier, ladite tête de vis étant logée au niveau de ladite fraisure, et
   ledit cache-vis est en appui contre ledit épaulement de sorte à être placé dans la continuité de la surface extérieure dudit premier élément de mobilier, et est à distance de ladite tête de vis. L'invention concerne également un kit d'assemblage de mobilier comprenant un premier élément de mobilier et un deuxième élément de mobilier comprenant un trou, ledit premier élément de mobilier comportant un trou débouchant muni d'une première extrémité débouchant sur une surface extérieure dudit premier élément de mobilier et une deuxième extrémité configurée pour se positionner en regard dudit trou dudit deuxième élément, ledit trou débouchant comportant :
   - un alésage présentant un premier diamètre D1 ;
   - un dégagement, ménagé dans la continuité dudit alésage et présentant une forme cylindrique avec un deuxième diamètre D2 inférieur audit premier diamètre D1, un épaulement séparant ledit alésage dudit dégagement ;
   - une fraisure ménagée dans la continuité dudit dégagement, et
   - une portion de passage ménagée dans la continuité de ladite fraisure, le kit d'assemblage comprenant en outre un dispositif de fixation amovible du premier élément de mobilier au deuxième élément de mobilier selon l'un des modes de réalisation précités.

Selon un aspect particulier d'au moins un mode de réalisation de l'invention, au moins un desdits premier élément de mobilier et deuxième élément de mobilier comporte un matériau parmi :
- un bois ;
- un dérivé du bois.

Selon un aspect particulier d'au moins un mode de réalisation de l'invention, le kit d'assemblage comprend en outre un outil de démontage.

L'invention concerne également un élément de mobilier pour kit d'assemblage de mobilier selon l'un des modes de réalisation précités, l'élément de mobilier comprenant un trou.

Selon un aspect particulier d'au moins un mode de réalisation de l'invention, l'élément de mobilier comprend en outre un insert métallique taraudé inséré dans ledit trou dudit deuxième élément.

L'invention concerne également un procédé de fabrication d'un kit d'assemblage de mobilier selon l'un des modes de réalisation précités, le procédé de fabrication comprenant les étapes suivantes :
- une étape de perçage dudit trou de passage selon un cinquième diamètre ;
- une étape de perçage dudit dégagement selon un deuxième diamètre ;
- une étape de fraisage de sorte à obtenir ladite fraisure, ladite fraisure étant positionnée entre ledit trou de passage et ledit dégagement, ladite fraisure formant une continuité avec ledit trou de passage et avec ledit dégagement ;
- une étape de perçage dudit alésage selon un premier diamètre, et
- une étape de perçage du trou dudit deuxième élément selon un sixième diamètre.

Il est à noter que ces différentes étapes sont réalisées de préférence successivement, selon un ordre à définir par un utilisateur. Toutefois, selon une alternative, ces différentes étapes peuvent être réalisées en une seule opération.

L'invention concerne également un procédé de montage d'un kit d'assemblage de mobilier selon l'un des modes de réalisation précités, le procédé de montage comprenant les étapes suivantes :
- une étape de positionnement dudit premier élément de mobilier et du deuxième élément de mobilier de sorte que la deuxième extrémité soit positionnée en regard du trou dudit deuxième élément de mobilier ;
- une étape de passage du dispositif de fixation amovible de ladite position libérée à ladite position assemblée de sorte que dans la position assemblée :
   ∘ ladite vis est logée dans ledit trou débouchant, le corps de vis étant partiellement logé au niveau de ladite portion de passage et débouchant dans ledit trou dudit deuxième élément de mobilier, ladite tête de vis étant logée au niveau de ladite fraisure, et
   ∘ ledit cache-vis est en appui contre ledit épaulement de sorte à être placé dans la continuité de la surface extérieure dudit premier élément de mobilier.

L'invention concerne également un procédé de démontage d'un kit d'assemblage de mobilier selon l'un des modes de réalisation précités, le procédé de démontage comprenant au moins une étape de retrait du cache-vis à l'aide d'un outil de démontage, et une étape de dévissage de ladite vis.

### Présentation des figures

L'invention, ainsi que les différents avantages qu'elle présente, seront plus facilement compris à la lumière de la description qui va suivre d'un mode de réalisation illustratif et non limitatif de celle-ci, et des dessins annexés parmi lesquels :
[Fig. 1] est une vue en perspective d'un trou débouchant selon un mode de réalisation de l'invention ;
[Fig. 2] est une vue en coupe latérale d'un trou débouchant selon un mode de réalisation de l'invention ;
[Fig. 3] est une vue en coupe latérale d'un kit d'assemblage de mobilier avec le dispositif de fixation amovible en position assemblée selon un mode de réalisation de l'invention ;
[Fig. 4] est une vue éclatée en coupe latérale d'un kit d'assemblage de mobilier selon un deuxième mode de réalisation de l'invention ;
[Fig. 5] est une vue éclatée en coupe latérale d'un kit d'assemblage de mobilier selon un troisième mode de réalisation de l'invention, et
[Fig. 6] est une vue éclatée en coupe latérale d'un kit d'assemblage de mobilier selon un quatrième mode de réalisation de l'invention.

### Description détaillée d'un mode de réalisation de l'invention

Le principe général de l'invention repose sur la mise en oeuvre d'un dispositif de fixation amovible réutilisable comprenant un cache vis et une vis, et d'un kit d'assemblage de mobilier. Le cache-vis est facile à insérer et à bien positionner et son retrait se fait sans risque d'endommager l'élément de mobilier.

Dans toute la description, le terme mobilier désigne tout meuble destiné à un usage personnel ou professionnel, qui sert à l'aménagement d'un espace ou d'un lieu de sorte à garnir ou orner cet espace ou ce lieu. Il peut s'agir par exemple de mobilier pour l'agencement des environnements privés, publics, voire même professionnels, tels que les habitations, les bureaux, les magasins, ou les bâtiments publics.

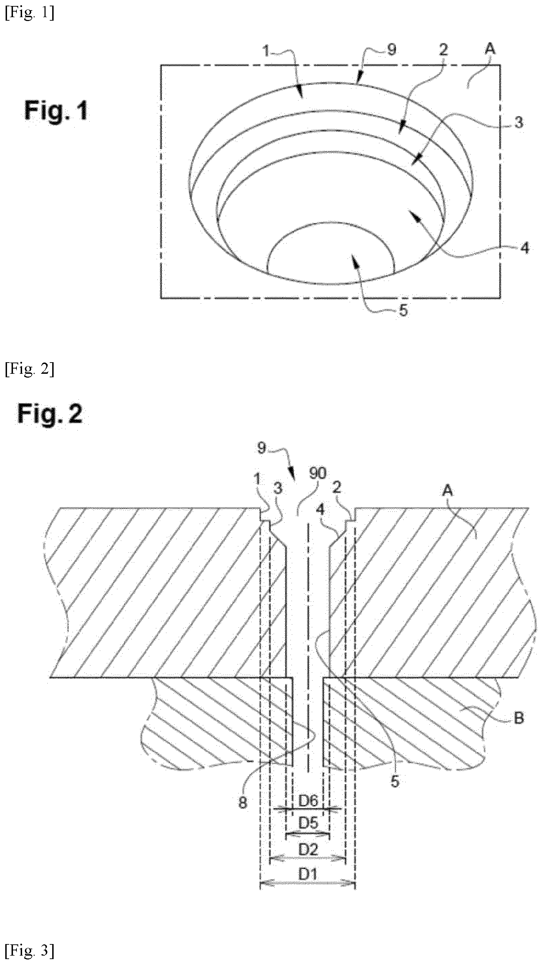

On présente maintenant, en relation avec les figures 1 à 3, un premier mode de réalisation de l'invention, pris à titre de simple exemple illustratif et non limitatif.

Selon l'invention, le kit d'assemblage de mobilier comprend un premier élément de mobilier A, un deuxième élément de mobilier B, et un dispositif de fixation amovible.

Il est à noter que le kit d'assemblage de mobilier peut également comprendre d'autres éléments de mobilier, par exemple des éléments venant s'intercaler entre l'élément de mobilier A et l'élément de mobilier B.

Ce dispositif de fixation amovible comporte un cache-vis 6 formé au moins partiellement à partir d'un matériau magnétique, et une vis 7 munie d'une tête de vis 71 et d'un corps de vis 70.

Il est à noter que la vis doit contenir des matériaux ferromagnétiques (tel que du fer, du nickel ou du cobalt) de sorte à pouvoir interagir magnétiquement avec le cache-vis selon l'invention.

Les éléments de mobilier peuvent, par exemple, être des poutres, des montants, des traverses, ou des panneaux de meuble. Ils peuvent également être des étagères ou des portes de meuble.

Selon un aspect de l'invention, au moins un du premier élément de mobilier A et du deuxième élément de mobilier B comporte un matériau parmi :
- un bois ;
- un dérivé du bois.

Dans le mode de réalisation présenté, les deux éléments comportent du bois. Par bois ou dérivé du bois, on peut notamment considérer les matériaux suivants :
- le bois massif ;
- les bois panneautés à une couche ou multicouches, lamellé-collé ou abouté (BLC) ;
- les bois plaqués tels que le contreplaqué ou le contreplaqué latté/lamellé, le multiplis, le lamibois ;
- les panneaux de particules tels que l'OSB, les plaqués, les mélaminés, les stratifiés ;
- les panneaux de fibres mous ou durs, de moyenne densité (MDF) ou haute densité (HDF) ;
- les panneaux alvéolaires (recouvert de panneaux de particules, MDF, contreplaqué ou stratifiés décoratifs, etc.) ;
- les stratifiés décoratifs (HPL), ou
- les panneaux composites bois- polymères (WPC).

Comme illustré, le premier élément de mobilier A comporte un trou débouchant 9 muni d'une première extrémité 90 débouchant sur une surface extérieure du premier élément de mobilier A et une deuxième extrémité configurée pour se positionner en regard d'un trou 8, qui est ici un trou borgne 8, formé dans le deuxième élément de mobilier B, lorsque le premier élément de mobilier A et le deuxième élément de mobilier B sont positionnés de sorte à être fixés l'un à l'autre.

Ce trou débouchant 9, plus particulièrement illustré en figures 1 et 2, est donc formé dans le premier élément de mobilier A et comporte :
- un alésage 1 présentant un diamètre D1 ;
- un dégagement 3, ménagé dans la continuité de l'alésage 1 et présentant une forme cylindrique avec un diamètre D2 inférieur au diamètre D1, un épaulement 2 séparant l'alésage 1 du dégagement 3 ;
- une fraisure 4 ménagée dans la continuité du dégagement 3, et
- un trou de passage 5 ménagé dans la continuité de la fraisure 4 et présentant un diamètre D5.

Pour ce qui est du trou borgne 8, il est formé dans le deuxième élément B et présente un diamètre D6 qui est ici inférieur au diamètre D5 du trou de passage 5.

Le deuxième élément de mobilier B peut également comprendre un insert métallique taraudé inséré dans le trou 8, de sorte à coopérer avec le filetage d'une vis.

Le trou du deuxième élément de mobilier peut également être un simple trou de passage, la vis traversant alors les premier et deuxième éléments de mobilier et venant se fixer à une pièce extérieure telle qu'un écrou.

Dans ce cas, dans un mode de réalisation, ce trou du deuxième élément de mobilier pourrait présenter un diamètre sensiblement égal au diamètre du trou de passage du premier élément de mobilier.

La fraisure 4 est destinée à accueillir la partie conique de la tête de vis. Elle a pour but de limiter l'enfoncement de la vis 7 lors du serrage, en conservant autant de matière que possible, et donc en épousant la forme conique de la tête de vis.

Il est à noter qu'avec la mise en oeuvre de la fraisure 4 dans la continuité du dégagement 3, la fraisure est dite noyée.

Quant au trou débouchant 9, il peut, par exemple, être formé lors d'un procédé de fabrication d'un kit d'assemblage de mobilier comprenant les étapes successives suivantes :
- une étape de perçage de la portion de passage 5 selon un diamètre D5 ;
- une étape de perçage du dégagement 3 selon un diamètre D2 ;
- une étape de fraisage de sorte à obtenir la fraisure 4, la dite fraisure étant positionnée entre la portion de passage 5 et le dégagement 3, la fraisure formant une continuité avec la portion de passage 5 et le dégagement 3;
- une étape de perçage de l'alésage 1 selon un diamètre D1.

Il est à noter que l'adjonction d'un dégagement à la fraisure a pour but de limiter le diamètre du trou débouchant dans l'alésage.

La portion de passage présente préférentiellement un diamètre D5 légèrement supérieur au diamètre de la partie filetée 72 de la vis de sorte à ce qu'en insérant la vis, le montage soit facilité, et inversement le démontage, en évitant que la vis ne se bloque dans le trou de passage.

Comme décrit ci-dessus, le dispositif de fixation amovible comporte un cache-vis 6 formé au moins partiellement à partir d'un matériau magnétique, et une vis 7 munie d'une tête de vis 71 et d'un corps de vis 70 présentant un filetage 72.

Dans ce mode de réalisation, la vis 7 est une vis à bois de sorte que la tête de vis présente une forme conique.

Selon d'autres modes de réalisation, on pourrait toutefois prévoir que la vis soit d'un autre type. Par exemple, on pourrait prévoir que la vis soit de type :
- vis pour plaque de plâtre ;
- vis à métaux ;
- vis à tôle, ou
- vis à béton.

Selon l'invention, le dispositif de fixation amovible est mobile entre au moins une position libérée, et une position assemblée dans laquelle :
- la vis 7 est logée dans le trou débouchant 9, le corps de vis 70 étant logé au niveau de la portion de passage 5 de sorte que la partie filetée 72 est au moins partiellement logée et vissée dans le trou 8 qui est ici borgne, et la tête de vis 71 étant logée au niveau de la fraisure 4, et
- le cache-vis 6 est en appui contre l'épaulement 2 de sorte à être placé dans la continuité de la surface extérieure du premier élément de mobilier A.

En position libérée, la vis 7 n'est pas logée dans le trou débouchant 9 et le cache-vis n'est pas positionné en appui contre l'épaulement 2. Cette position correspond classiquement à une position avant montage ou après démontage d'un meuble.

Le passage du dispositif de fixation amovible de la position libérée à la position assemblée peut se faire lors d'un procédé de montage du kit d'assemblage de mobilier, suite à une étape de positionnement du premier élément de mobilier A et du deuxième élément de mobilier B de sorte que la deuxième extrémité du trou débouchant soit positionnée en regard du trou borgne formé dans le deuxième élément de mobilier B.

Ensuite, ce procédé de montage du kit d'assemblage de mobilier comprend donc une étape de passage du dispositif de fixation amovible de la position libérée à la position assemblée de sorte que, dans la position assemblée :
- la vis 7 est logée dans le trou débouchant 9, le corps de vis 70 étant logé au niveau de la portion de passage 5 de sorte que la partie filetée 72 est au moins partiellement logée et vissée dans le trou borgne 8, la tête de vis 71 étant logée au niveau de la fraisure 4, et
- le cache-vis 6 est en appui contre l'épaulement 2 de sorte à être placé dans la continuité de la surface extérieure du premier élément de mobilier A.

En d'autres termes, le passage du dispositif de fixation amovible de la position libérée à la position assemblée se fait par vissage de la vis 7 dans le trou borgne 8 du deuxième élément de mobilier B jusqu'à ce que la tête de vis 71 vienne au contact de la fraisure 4, puis par un positionnement du cache-vis en appui contre l'épaulement.

Pour que le cache-vis 6, lorsqu'il est en appui contre l'épaulement 2, soit placé dans la continuité de la surface extérieure du premier élément de mobilier A, la profondeur de l'alésage 1 est sensiblement égale à l'épaisseur du cache-vis 6.

Le diamètre D1 de l'alésage 1 quant à lui est très légèrement supérieur, par exemple selon un ratio de 1% à 15%, au diamètre D4 du cache-vis 6, de sorte qu'il n'y ait aucun contact prolongé entre la surface cylindrique extérieure du cache-vis 6 et la surface cylindrique intérieure de l'alésage 1, et donc aucun frottement qui pourrait compromettre la mise en place ou le retrait du cache-vis.

En position assemblée, la tête de vis 71 est donc logée au niveau de la fraisure. Pour ce faire, la tête de la vis 71 présente ici une forme conique complémentaire de la forme de la fraisure 4. Une partie de la tête de vis, à savoir le sommet, ou extrémité supérieure, est également logée au niveau du dégagement 3.

Ce dégagement 3 présente un diamètre D2 qui est inférieur, par exemple selon un ratio de 10 à 25 %, à celui du cache-vis 6.

Son diamètre D2 est également supérieur, par exemple selon un ratio de 1 à 5%, au diamètre maximum D3 de la tête de vis 71.

Quant à la tête de vis 71, et selon les modes de réalisation, son diamètre maximum D3 est inférieur de 10% à 40% au diamètre D4 du cache-vis 6, préférentiellement inférieur de 15% à 25%.

Il est à noter que le diamètre D2 du dégagement 3 est légèrement supérieur au diamètre maximum D3 de la tête de vis, selon un ratio compris entre 1 et 5% afin d'éviter que cette dernière, lors du serrage de la vis, ne détériore l'épaulement 2.

En outre, la profondeur du dégagement 3 est suffisante de sorte que le cache-vis 6 et la tête de vis ne se touchent pas lorsque la vis 7 est à l'état serré, c'est-à-dire que le cache-vis 6 soit à distance de la tête de vis 71 en position assemblée lorsqu'il est en appui sur l'épaulement, et ce quelle que soit la forme de la vis.

Cette profondeur du dégagement est, dans ce mode de réalisation, légèrement supérieure à la distance entre le cache-vis 6 et la tête de vis 71 de sorte que le cache-vis et la tête de vis ne se touchent pas lorsque la vis est à l'état serré. En d'autres termes, la distance entre le cache-vis 6 est la tête de vis 71 est légèrement inférieure à la profondeur du dégagement. Dans ce mode de réalisation, le cache-vis 6 et la tête de vis 71 sont séparés d'une distance légèrement inférieure à une distance comprise entre 0.5mm et 3mm.

Selon un mode de réalisation alternatif, cette profondeur du dégagement pourrait sensiblement correspondre à la distance entre le cache-vis et la tête de vis.

Cet espace entre le cache-vis 6 et la tête de vis 71, autrement appelé interstice, permet de contrôler la force magnétique qui attire le cache-vis 6 et la vis 7 et garantir une mise en place et un retrait aisé du cache vis. Ainsi, il permet de garantir la force magnétique nécessaire au bon maintien du cache-vis dans son logement, tout en permettant son retrait facile.

De plus, cet espace permet d'éviter lors de la manipulation du cache-vis que ce dernier et la tête de vis s'entrechoquent et que le cache-vis, présentant un matériau magnétique fragile et ne supportant pas les chocs, ne se détériore. En effet, lors de la mise en place du cache-vis, celui-ci est violemment attiré par la vis. Sans l'épaulement qui garantit un interstice, le cache-vis percuterait la vis et le choc risquerait d'endommager la matière magnétique du cache-vis.

En outre, grâce à l'épaulement 2 sur lequel le cache-vis 6 s'appuie en position assemblée, la position de ce dernier reste indépendante de celle de la vis 7 à laquelle il est attiré magnétiquement.

En effet, il peut être difficile de garantir la position exacte de la vis 7 à l'état serré, c'est-à-dire en position d'assemblage, et ce notamment dans le bois. Après plusieurs montages et démontages, une telle solution permet ainsi que le cache-vis 6 reste affleuré tandis que la vis 7 peut potentiellement continuer à s'enfoncer légèrement. Cela offre ainsi une certaine tolérance de positionnement de la tête de vis.

Enfin, un tel espace, ou interstice, facilite le retrait du cache-vis. En effet, si le cache-vis est placé contre la vis, la force magnétique qui les lie est considérablement plus importante que s'ils ne sont pas en contact.

Selon l'invention, le retrait du cache-vis s'effectue par le biais d'un procédé de démontage d'un kit d'assemblage de mobilier qui comprend au moins une étape de retrait du cache-vis 6 à l'aide d'un outil de démontage, et une étape de dévissage de la vis 7.

Selon un mode de réalisation l'outil de démontage est un outil présentant au moins une portion magnétique destinée à orienter le cache-vis pour mettre en place ce cache-vis lors du montage, et à le retirer tout en conservant son intégrité lors du démontage.

Plus particulièrement, selon un mode de réalisation, l'outil de démontage est équipé d'un matériau magnétique orienté de telle sorte que la polarité de la face du matériau magnétique en regard du cache-vis à l'état monté soit la polarité opposée à celle de la face extérieure du cache-vis. Ainsi les deux faces en question s'attirent magnétiquement.

Ce matériau magnétique peut, par exemple, être un aimant au néodyme.

Le matériau magnétique qui équipe l'outil de démontage peut être recouvert d'une couche d'amortissement, fait par exemple en feutrine ou en silicone, qui a pour fonction d'empêcher que la face extérieure du cache-vis n'entre en contact avec le matériau magnétique qui équipe l'outil de démontage.

Lors de l'étape de retrait du cache-vis, l'outil de démontage est plaqué contre la face extérieure du cache-vis, qui se retrouve alors attirée contre le revêtement protecteur d'amortissement et reste plaquée dessus. Le cache-vis peut alors être extrait sans que la face extérieure du cache-vis n'ait subi de chocs ou d'éraflures indésirables.

Inversement, lors du procédé de montage du kit d'assemblage de mobilier, et plus précisément lors de la pose du cache-vis, ce dernier est placé sur l'outil de démontage. La polarité du matériau magnétique qui équipe l'outil de démontage permet d'orienter correctement le cache-vis, encore mobile, avant qu'il ne soit placé dans son logement.

Pour que tous les cache-vis soient orientés de la même manière, notamment dans le but de faciliter le procédé ultérieur de démontage, il est nécessaire que la même polarité soit donnée à tous les cache-vis.

Par exemple, le pôle positif de l'élément magnétique qui équipe le cache-vis peut pointer systématiquement en direction de la vis d'assemblage et par conséquent, la face extérieure du cache-vis (potentiellement recouverte d'un revêtement esthétique) est dans ce cas systématiquement le pôle négatif.

L'élément magnétique équipant le cache-vis peut par exemple être un aimant au néodyme, et être composé d'un alliage de néodyme, de fer et de bore.

Un tel élément magnétique est de préférence axialement magnétisé de sorte que les pôles soient situés sur les surfaces circulaires de cet élément magnétique.

De même que l'outil de démontage peut présenter une couche d'amortissement, et selon un mode de réalisation non illustré, le cache-vis peut présenter une couche supérieure de masquage.

Une telle couche de masque peut, par exemple, comprendre une couche de protection contre la corrosion de sorte à protéger le cache-vis, voire la vis, des effets de la dégradation du temps. Elle peut également comprendre une couche colorée ou texturée, de sorte à rendre mieux visible ou à masquer le cache-vis en imitant ou en reprenant le matériau des éléments de mobilier.

Une telle couche supérieure de masquage peut également faire office d'élément d'indexation, notamment pour identifier les pôles magnétiques du cache-vis. Il est à noter que, dans la position assemblée, ladite couche supérieure de masquage est ménagée dans la continuité de la surface extérieure du premier élément de mobilier A de sorte que le dispositif de fixation amovible selon ce mode de réalisation présente les mêmes avantages.

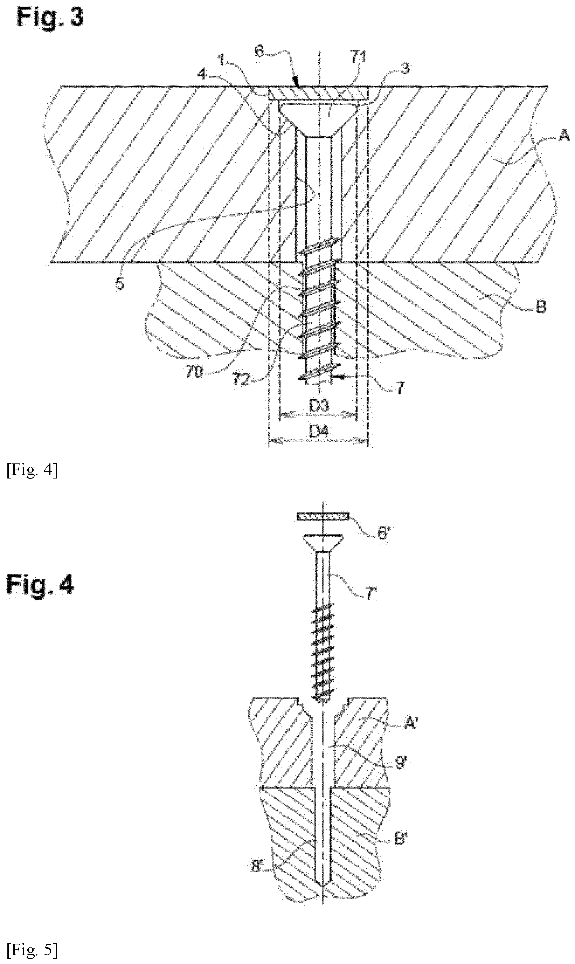

On présente maintenant, aux figures 4 à 6, trois modes de réalisations de l'invention, mettant en oeuvre des vis de tailles différentes, et avec des dimensions différentes pour le trou débouchant du premier élément de mobilier et le trou borgne du deuxième élément de mobilier.

La figure 4 est une vue éclatée en coupe latérale d'un kit d'assemblage de mobilier selon un deuxième mode de réalisation de l'invention, représentant un premier élément de mobilier A' en appui contre un deuxième élément de mobilier B' de sorte que le trou débouchant 9' soit dans la continuité du trou borgne 8'.

Dans ce mode de réalisation, la vis 7' comprend une tête de vis présentant un diamètre maximum d'environ 7.8mm avec une hauteur de la portion cylindrique de la tête de vis sensiblement égale à 0.8mm. Quant au corps de vis, il présente un diamètre sensiblement égal à 2.4mm, avec un diamètre maximal au niveau de la partie filetée sensiblement égal à 4mm.

Quant au cache-vis 6', dans ce mode de réalisation, il présente un diamètre sensiblement égal à 10mm pour une hauteur sensiblement égale à 1.5mm.

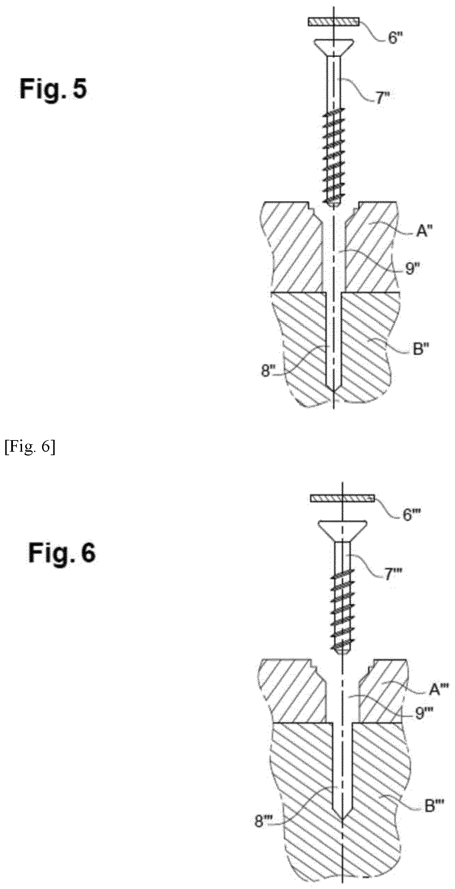

La figure 5 est une vue éclatée en coupe latérale d'un kit d'assemblage de mobilier selon un troisième mode de réalisation de l'invention, représentant un premier élément de mobilier A" en appui contre un deuxième élément de mobilier B" de sorte que le trou débouchant 9" soit dans la continuité du trou borgne 8".

Dans ce mode de réalisation, la vis 7" comprend une tête de vis présentant un diamètre maximum d'environ 5.8mm avec une hauteur de la portion cylindrique de la tête de vis sensiblement égale à 0.5mm. Quant au corps de vis, il présente un diamètre sensiblement égal à 1.9mm, avec un diamètre maximal au niveau de la partie filetée sensiblement égal à 3mm.

Quant au cache-vis 6", dans ce mode de réalisation, il présente un diamètre sensiblement égal à 8mm avec une hauteur sensiblement égale à 1.5mm.

La figure 6 est une vue éclatée en coupe latérale d'un kit d'assemblage de mobilier selon un quatrième mode de réalisation de l'invention, représentant un premier élément de mobilier A'" en appui contre un deuxième élément de mobilier B‴ de sorte que le trou débouchant 9‴ soit dans la continuité du trou borgne 8'".

Dans ce mode de réalisation, la vis 7‴ comprend une tête de vis présentant un diamètre maximum d'environ 18.5mm avec une hauteur de la portion cylindrique de la tête de vis sensiblement égale à 1.5mm. Quant au corps de vis, il présente un diamètre sensiblement égal à 6.4mm, avec un diamètre maximal au niveau de la partie filetée sensiblement égal à 10mm.

Quant au cache-vis 6‴, dans ce mode de réalisation, il présente un diamètre sensiblement égal à 22mm avec une hauteur sensiblement égale à 2mm.

## Revendications

1. Dispositif de fixation amovible d'un premier élément de mobilier (A) à un deuxième élément de mobilier (B), ledit premier élément de mobilier (A) comportant un trou débouchant (9) muni d'une première extrémité (90) débouchant sur une surface extérieure dudit premier élément de mobilier (A) et une deuxième extrémité configurée pour se positionner en regard d'un trou (8) formé dans ledit deuxième élément de mobilier (B), ledit trou débouchant (9) comportant :
- un alésage (1) présentant un premier diamètre (D1) ;
- un dégagement (3), ménagé dans la continuité dudit alésage (1) et présentant une forme cylindrique avec un deuxième diamètre (D2) inférieur audit premier diamètre (D1), un épaulement (2) séparant ledit alésage (1) dudit dégagement (3) ;
- une fraisure (4) ménagée dans la continuité dudit dégagement (3), et
- une portion de passage (5) ménagée dans la continuité de ladite fraisure (4),
ledit dispositif de fixation amovible comportant un cache-vis (6) formé au moins partiellement à partir d'un matériau magnétique, et une vis (7) munie d'une tête de vis (71) et d'un corps de vis (70),
ledit dispositif de fixation amovible étant mobile entre au moins une position libérée, et une position assemblée dans laquelle :
- ladite vis (7) est logée dans ledit trou débouchant (9), le corps de vis (70) étant partiellement logé au niveau de ladite portion de passage (5) et étant maintenu dans ledit trou (8) dudit deuxième élément de mobilier (B), ladite tête de vis (71) étant logée au niveau de ladite fraisure (4), et
- ledit cache-vis (6) est en appui contre ledit épaulement (2) de sorte à être placé dans la continuité de la surface extérieure dudit premier élément de mobilier (A), et est à distance de ladite tête de vis (71).

2. Dispositif de fixation amovible selon la revendication 1, **caractérisé en ce que** ledit cache-vis (6) et ladite tête de vis (71) sont séparés d'une distance comprise entre 0,5mm et 3mm.

3. Dispositif de fixation amovible selon l'une des revendications précédentes, **caractérisé en ce que** la tête de la vis (71) présente une forme conique complémentaire de la forme de la fraisure (4).

4. Dispositif de fixation amovible selon l'une des revendications précédentes, **caractérisé en ce que** ledit cache-vis (6) présente une couche supérieure de masquage, et **en ce que**, dans la position assemblée, ladite couche supérieure de masquage est ménagée dans la continuité de la surface extérieure dudit premier élément de mobilier (A).

5. Dispositif de fixation amovible selon l'une des revendications précédentes, **caractérisé en ce que** ladite tête de vis (71) présente un troisième diamètre maximum (D3) inférieur de 10% à 40% à un quatrième diamètre (D4) dudit cache-vis (6).

6. Kit d'assemblage de mobilier comprenant un premier élément de mobilier (A) et un deuxième élément de mobilier (B) comprenant un trou (8), ledit premier élément de mobilier (A) comportant un trou débouchant (9) muni d'une première extrémité (90) débouchant sur une surface extérieure dudit premier élément de mobilier (A) et une deuxième extrémité configurée pour se positionner en regard dudit trou (8), ledit trou débouchant (9) comportant :
- un alésage (1) présentant un premier diamètre (D1) ;
- un dégagement (3), ménagé dans la continuité dudit alésage (1) et présentant une forme cylindrique avec un deuxième diamètre (D2) inférieur audit premier diamètre (D1), un épaulement (2) séparant ledit alésage (1) dudit dégagement (3) ;
- une fraisure (4) ménagée dans la continuité dudit dégagement (3), et
- une portion de passage (5) ménagée dans la continuité de ladite fraisure (4),
le kit d'assemblage comprenant en outre un dispositif de fixation amovible du premier élément de mobilier (A) au deuxième élément de mobilier (B) selon l'une des revendications 1 à 5.

7. Kit d'assemblage selon la revendication 6, **caractérisé en ce qu'**au moins un desdits premier élément de mobilier (A) et deuxième élément de mobilier (B) comporte un matériau parmi :
- un bois ;
- un dérivé du bois.

8. Kit d'assemblage selon l'une des revendications 6 ou 7, **caractérisé en ce que** qu'il comprend en outre un outil de démontage.

9. Elément de mobilier (B) pour kit d'assemblage de mobilier selon l'une des revendications 6 à 8, **caractérisé en ce que** l'élément de mobilier comprend un trou (8).

10. Elément de mobilier (B) selon la revendication précédente, **caractérisé en ce qu'**il comprend en outre un insert métallique taraudé inséré dans ledit trou (8) dudit deuxième élément (B).

11. Procédé de fabrication d'un kit d'assemblage de mobilier selon l'une des revendications 6 à 8, le procédé de fabrication comprenant les étapes suivantes :
- une étape de perçage de ladite portion de passage (5) selon un cinquième diamètre (D5) ;
- une étape de perçage dudit dégagement (3) selon un deuxième diamètre (D2) ;
- une étape de fraisage de sorte à obtenir ladite fraisure (4), ladite fraisure étant positionnée entre ladite portion de passage (5) et ledit dégagement (3), ladite fraisure formant une continuité avec ladite portion de passage (5) et avec ledit dégagement (3) ;
- une étape de perçage dudit alésage (1) selon un premier diamètre (D1) ;
- une étape de perçage dudit trou (8) dudit deuxième élément (B) selon un sixième diamètre (D6).

12. Procédé de montage d'un kit d'assemblage de mobilier selon l'une des revendications 6 à 8, le procédé de montage comprenant les étapes suivantes :
- une étape de positionnement dudit premier élément de mobilier (A) et du deuxième élément de mobilier (B) de sorte que la deuxième extrémité soit positionnée en regard dudit trou (8) dudit deuxième élément de mobilier (B) ;
- une étape de passage du dispositif de fixation amovible de ladite position libérée à ladite position assemblée de sorte que, dans la position assemblée :
∘ ladite vis (7) est logée dans ledit trou débouchant (9), le corps de vis (70) étant partiellement logé au niveau de ladite portion de passage (5) et étant maintenu dans ledit trou (8) dudit deuxième élément de mobilier (B), ladite tête de vis (71) étant logée au niveau de ladite fraisure (4), et
∘ ledit cache-vis (6) est en appui contre ledit épaulement (2) de sorte à être placé dans la continuité de la surface extérieure dudit premier élément de mobilier (A).

13. Procédé de démontage d'un kit d'assemblage de mobilier selon l'une des revendications 6 à 8, le procédé de démontage comprenant au moins une étape de retrait du cache-vis (6) à l'aide d'un outil de démontage, et une étape de dévissage de ladite vis (7).
